# DEMANDE DE BREVET EUROPEEN

(11) **EP 3 971 253 A1**
(43) Date de publication de la demande: **23.03.2022**
(21) Numéro de dépôt: 20196986.2
(22) Date de dépôt: 18.09.2020
(51) Int. Cl.: C09J 5/00, B24B 13/00, G04D 3/06

(54) **PROCEDE D'USINAGE D'UNE PIECE MECANIQUE**

(71) Demandeur: Precitrame Machines SA, 2720 Tramelan (CH)
(72) Inventeur: ROBERT, Vincent, 2065 Savagnier (CH)
(74) Mandataire: Bovard SA Neuchâtel

(57) **Abrégé**

La présente invention concerne un procédé d'usinage d'une pièce mécanique (1) comprenant :
a) une étape de collage de ladite pièce mécanique (1) à usiner sur un porte-pièce (100) par dépôt d'une couche de colle réticulable (10) comprenant une composition adhésive réticulable et des capsules thermoexpansibles renfermant un gaz, suivi d'une réticulation de ladite couche de colle (10),
b) au moins une étape d'usinage de la pièce mécanique (1) à usiner collée sur son porte-pièce (100) selon l'étape a),
c) une étape de séparation de la pièce mécanique (1), usinée selon l'étape b), de son porte-pièce (100) par application de chaleur à ladite couche de colle (10) à une température supérieure à la température d'activation de l'expansion des capsules thermoexpansibles.

L'invention concerne également une machine de collage d'une pièce mécanique (1) à usiner sur un porte-pièce (100) au moyen d'une colle réticulable pour la mise en oeuvre de l'étape a) dudit procédé d'usinage.

## Description

### Domaine technique

La présente invention concerne un procédé d'usinage d'une pièce mécanique comprenant une étape de collage de ladite pièce mécanique à usiner sur un porte-pièce. Ladite pièce mécanique peut être plus particulièrement un composant dans le domaine de la microtechnique, par exemple un composant horloger. Elle concerne également une machine de collage d'une pièce mécanique sur un porte-pièce pour la mise en oeuvre de l'étape de collage dudit procédé d'usinage.

### Etat de la technique

Il existe à l'heure actuelle différentes solutions pour immobiliser une pièce mécanique, et notamment un composant horloger, afin de pouvoir l'usiner correctement.

Une première solution consiste à utiliser une multitude de systèmes mécaniques de serrage, tels que des pinces, pour la réalisation des différentes opérations d'usinage jusqu'à l'obtention de la pièce terminée. Cette solution impose des reprises de références à chaque étape d'usinage sur des stations d'usinage différentes. De plus, l'accès à la pièce à usiner par les outils d'usinage est limité, en raison de l'encombrement des systèmes mécaniques de serrage.

Une autre solution consiste à utiliser un collage temporaire, par exemple au moyen de thermocolles ou d'alliages métalliques. Toutefois, ces solutions de collage sont difficilement démontables et nettoyables sans avoir à utiliser des produits chimiques ou à effectuer des actions mécaniques conséquentes. De plus, la tenue et la rigidité obtenues avec les solutions de collage actuelles sont insuffisantes de sorte qu'il n'est pas envisageable d'automatiser l'usinage des pièces, et notamment les composants dans le domaine de la microtechnique, par exemple des composants horlogers.

En outre, les solutions connues entrainent un risque de dégradation de la qualité et de l'aspect des pièces, du fait des multiples manipulations inter-process, qui sont sources de coups, chocs et rayures par exemple.

La présente invention vise à remédier à ces inconvénients en proposant un procédé d'usinage d'une pièce mécanique permettant de garantir la tenue de la pièce lors de son usinage et d'obtenir une pièce usinée propre, afin de pouvoir proposer un procédé rapide, répétable, robuste et automatisable.

Un autre but de la présente invention est de proposer un procédé d'usinage d'une pièce mécanique permettant de réaliser différentes étapes d'usinage ou d'autres traitements sur une ou plusieurs stations au moyen d'un seul serrage de la pièce, en permettant des transferts entre les différentes stations.

### Divulguation de l'invention

A cet effet, l'invention concerne un procédé d'usinage d'une pièce mécanique comprenant :
a) une étape de collage de ladite pièce mécanique à usiner sur un porte-pièce par dépôt d'une couche de colle réticulable comprenant une composition adhésive réticulable et des capsules thermoexpansibles renfermant un gaz, suivi d'une réticulation de ladite couche de colle,
b) au moins une étape d'usinage de la pièce à usiner collée sur son porte-pièce selon l'étape a),
c) une étape de séparation de la pièce, usinée selon l'étape b), de son porte-pièce par application de chaleur à ladite couche de colle à une température supérieure à la température d'activation de l'expansion des capsules thermoexpansibles.

Le procédé selon l'invention permet de garantir la tenue temporaire de la pièce mécanique lors des étapes d'usinage ou autres traitements afin de réaliser un usinage avec une grande précision et une grande rigidité, tout en permettant d'obtenir très rapidement après usinage, une pièce usinée propre. Ainsi, le procédé selon l'invention est répétable, robuste et automatisable, permettant son industrialisation, en vue d'accélérer les cadences de production de manière significative.

La présente invention concerne également une machine de collage d'une pièce mécanique à usiner sur un porte-pièce au moyen d'une colle réticulable pour la mise en oeuvre de l'étape a) du procédé d'usinage tel que défini ci-dessus, ladite machine comprenant au moins un dispositif de fixation d'un porte-pièce, un système de centrage de la pièce à usiner sur son porte-pièce, un système de dosage de la colle, un système de dépôt de la colle, et un système d'appui de la pièce à usiner assemblée à son porte-pièce.

D'une manière avantageuse, la colle utilisée dans la présente invention est une colle réticulable par UV comprenant :
- 60 à 95 % en poids d'une composition adhésive réticulable par UV comprenant :
   - 30 à 60% en poids de résine de polyuréthane méthacrylate ;
   - 10 à 30% en poids de méthacrylate de 2-hydroxyéthyle ;
   - 10 à 30% en poids de méthacrylate d'isobornyle;
   - 1 à 5% en poids de méthacrylate d'hydroxyalkyle ;
   - 1 à 5% en poids d'acide acrylique;
   - 0.1 à 1 % en poids d'acide méthacrylique;
   - 1 à 5 % en poids de photoinitiateur ; les quantités respectives des composants de la composition adhésive étant telles que leur somme est égale à 100% en poids;
- 5 à 40% en poids de capsules thermoexpansibles renfermant un gaz et ayant une taille moyenne de particules initiale comprise entre 5 µm et 40 µm, et de préférence entre 5 µm et 20 µm, lesdites capsules thermoexpansibles étant choisies pour s'expanser sur une gamme de températures de préférence comprises entre 80° C et 235° C, et plus préférentiellement comprises entre 80° C et 180° C.

### Brève description des dessins

D'autres caractéristiques et avantages de la présente invention apparaîtront à la lecture de la description détaillée suivante de différents modes de réalisation de l'invention, donnés à titre d'exemples non limitatifs, et faite en référence aux dessins annexés dans lesquels :
- la figure 1 représente une vue éclatée schématisée de la pièce à usiner et de son porte-pièce au cours de l'étape a) du procédé selon l'invention;
- la figure 2 représente une vue en perspective du système de mise en référence de la pièce à usiner sur la machine de collage utilisée dans la présente invention;
- la figure 3 représente une vue en coupe de la pièce à usiner, de son porte-pièce et du système de mise en référence utilisé dans la présente invention ;
- la figure 4 représente une première variante de mise en oeuvre de l'étape c) selon la présente invention ;
- la figure 5 représente une deuxième variante de mise en oeuvre de l'étape c) selon la présente invention ; et
- la figure 6 représente la pièce usinée et son porte-pièce obtenus après la mise en oeuvre de l'étape c) selon la présente invention.

### Modes de réalisation de l'invention

La présente invention concerne un procédé d'usinage d'une pièce mécanique, et notamment d'un composant dans le domaine de la microtechnique, tel qu'un composant horloger, par exemple une glace en saphir.

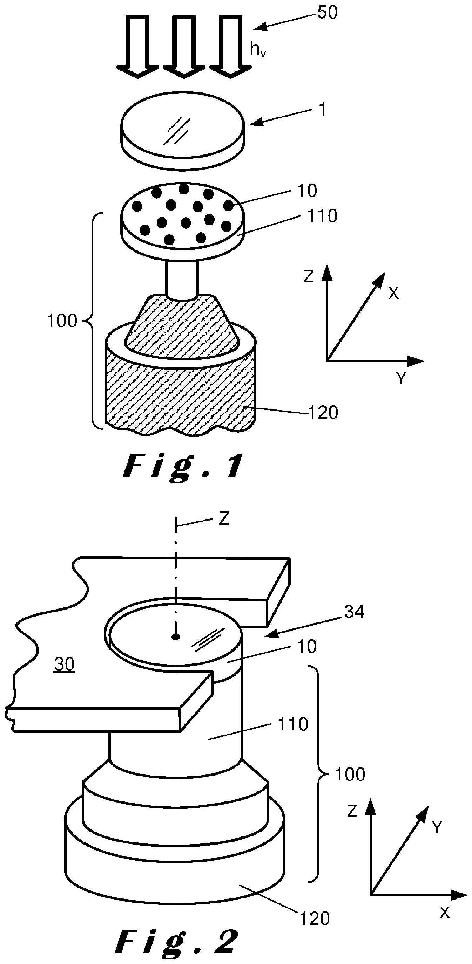

Selon l'invention, et en référence à la figure 1, le procédé d'usinage selon l'invention comprend une première étape a) de collage de la pièce mécanique 1 à usiner sur un porte-pièce 100 comprenant tout d'abord le dépôt d'une couche de colle réticulable 10 comprenant une composition adhésive réticulable (i.e polymérisable de manière irréversible par formation de liaisons covalentes entre les chaines polymères) et des capsules thermoexpansibles renfermant un gaz.

D'une manière préférée, la colle est une colle réticulable par UV comprenant :
- 60 à 95 % en poids d'une composition adhésive réticulable par UV comprenant:
   - 30 à 60%, et de préférence 50 à 60%, en poids de résine de polyuréthane méthacrylate ;
   - 10 à 30%, et de préférence 20 à 30%, en poids de méthacrylate de 2-hydroxyéthyle ;
   - 10 à 30%, et de préférence 10 à 20%, en poids de méthacrylate d'isobornyle;
   - 1 à 5% en poids de méthacrylate d'hydroxyalkyle ;
   - 1 à 5% en poids d'acide acrylique;
   - 0.1 à 1 % en poids d'acide méthacrylique;
   - 1 à 5 % en poids de photoinitiateur, tel que le tert-butyl perbenzoate, les quantités respectives des composants de la composition adhésive étant telles que leur somme est égale à 100% en poids (par rapport au poids total de la composition adhésive);
- 5 à 40% en poids de capsules thermoexpansibles renfermant un gaz et ayant une taille moyenne de particules initiale comprise entre 5 µm et 40 µm, de préférence entre 5 µm et 20 µm, et plus préférentiellement entre 10 µm et 17 µm (par rapport au poids total de la colle).

Les composants de la composition adhésive réticulable par UV, et en particulier la résine de polyuréthane méthacrylate, sont choisis de sorte que ladite composition adhésive présente par exemple une viscosité Brookfield - RVT, 25° C, Mobile 6, vitesse 20 tr/min de 15'000 à 26'000 mPa.s.

La composition adhésive réticulable par UV est de préférence de nature acrylique monocomposant, à base de monomères comprenant au moins une fonction acrylate ou méthacrylate et/ou de résines acrylates, telles que polyuréthane-acrylate, polyester-acrylate, polyéther-acrylate, etc. Il est bien évident que toute autre composition adhésive réticulable appropriée peut être utilisée, par exemple une composition adhésive réticulable par la chaleur, à une température toutefois inférieure à la température d'activation de l'expansion des capsules thermoexpansibles. L'avantage de la réticulation par UV est de pouvoir distribuer et appliquer la colle à température ambiante, sans chauffage.

D'une manière avantageuse, le pourcentage en poids des capsules thermoexplansibles dans la colle est compris entre 10% et 35%, et plus préférentiellement entre 15% et 30%, bornes incluses.

De préférence, le gaz des capsules thermoexpansibles est le butane ou l'isobutane, et plus préférentiellement l'isobutane, ledit gaz étant contenu dans une enveloppe thermoplastique, par exemple de type acrylate. Tout autre gaz expansible adéquat peut être utilisé.

De telles capsules sont commercialisées sous la forme d'agent gonflant et sont disponibles sur le marché.

Lesdites capsules thermoexpansibles sont choisies de sorte que leur température d'activation de l'expansion est supérieure à la température dégagée au cours de l'étape b) d'usinage et inférieure à la température de la chaleur appliquée à la couche de colle lors de l'étape c) de séparation afin de s'expanser lors de ladite étape c), comme cela sera décrit ci-après.

Lesdites capsules thermoexpansibles sont également choisies de sorte que leur température d'expansion maximale est supérieure à la température de la chaleur appliquée à la couche de colle lors de l'étape c) de séparation, afin de ne pas risquer de détruire l'enveloppe desdites capsules.

D'une manière avantageuse, lesdites capsules thermoexpansibles sont choisies pour s'expanser sur une gamme de températures de préférence comprises entre 80° C et 235° C, et plus préférentiellement comprises entre 80° C et 180° C, en fonction de la température de la chaleur appliquée à la couche de colle lors de l'étape c) de séparation.

Par exemple, lorsque la température de la chaleur appliquée à la couche de colle lors de l'étape c) de séparation est de l'ordre de 100° C, lesdites capsules thermoexpansibles peuvent avoir une température d'activation de l'expansion comprise entre 80° C et 100° C et une température d'expansion maximale comprise entre 120° C et 135° C.

La colle peut être réalisée au préalable en mélangeant les quantités appropriées de composition adhésive et de capsules thermoexpansibles, le mélange étant stable et pouvant être stocké en attente de son utilisation.

L'étape a) de collage est mise en oeuvre au moyen d'une machine de collage qui comprend au moins un dispositif de fixation du porte-pièce 100, un système de centrage de la pièce à usiner 1 sur son porte-pièce 100 (par exemple au moyen de capteurs optiques ou de moyens mécaniques), un système de dosage de la colle 10 (par exemple par dosage volumétrique), un système de dépôt de la colle 10, et un système d'appui de la pièce à usiner 1 assemblée à son porte-pièce 100. Ces différents éléments dont la fonction apparaitra plus en détails ci-après sont connus de l'homme du métier et ne nécessitent pas de description détaillée. La machine de collage peut être manuelle ou automatique.

D'une manière avantageuse, la machine de collage comprend également un système de mise en référence de la pièce à usiner comprenant une fourchette 30, agencée pour créer un joint de colle entre la pièce à usiner 1 et son porte-pièce 100. Ce système sera décrit en détails ci-après.

De plus, lorsque la colle est une colle réticulable par UV, la machine de collage comprend également une source 50 de lumière UV. Avantageusement, ladite source permet d'appliquer un flash UV de moins de 20 secondes, et de préférence de moins de 15 secondes à 365 nm. La source UV a une intensité comprise de préférence entre 30 et 100 mW/cm².

Afin qu'un faisceau de lumière UV de la source 50 puisse être apporté à la couche de colle 10 à travers la pièce mécanique à usiner 1 et/ou à travers le porte-pièce 100, ladite pièce mécanique à usiner 1 et/ou le porte-pièce 100 est, au moins partiellement, transparent aux UV.

De préférence, c'est la pièce mécanique 1 qui est transparente aux UV. De préférence, ladite pièce mécanique à usiner 1 est réalisée, au moins partiellement, dans un matériau choisi parmi le groupe comprenant le verre, le corindon, le saphir, le quartz, la céramique, un métal, un alliage non-ferreux, un semi-conducteur, et une combinaison de ces matériaux. Le porte-pièce 100 peut être réalisé en acier trempé.

Le porte-pièce 100 comprend un plateau 110 constituant une surface de collage sur laquelle est appliquée la colle 10, ainsi qu'un socle 120 comprenant un accouplement agencé pour pouvoir être fixé facilement et de manière amovible au dispositif de fixation de la machine de collage, ou ensuite à d'autres dispositifs de fixation sur une ou plusieurs stations d'usinage ou de tout autre traitement. Avantageusement, le porte-pièce 100 est agencé pour être universel.

La colle 10 est dosée au moyen du système de dosage de la colle 10 de la machine de collage selon la quantité requise. Puis la colle 10 est déposée sur le plateau 110 du porte-pièce 100 au moyen du système de dépôt de la colle 10 de la machine de collage, selon une forme propre à la pièce à usiner 1, par exemple sous la forme d'une pluralité de gouttes, d'un filet ou d'un cordon.

D'une manière particulièrement avantageuse, l'étape a) du procédé comprend, après le dépôt de la colle 10, l'application de la pièce à usiner 1 sur son porte-pièce lors d'une étape de mise en référence de la pièce à usiner 1 afin de créer un joint de colle 10 régulier, entre la pièce à usiner et son porte-pièce 100, au moyen du système de mise en référence de la machine de collage.

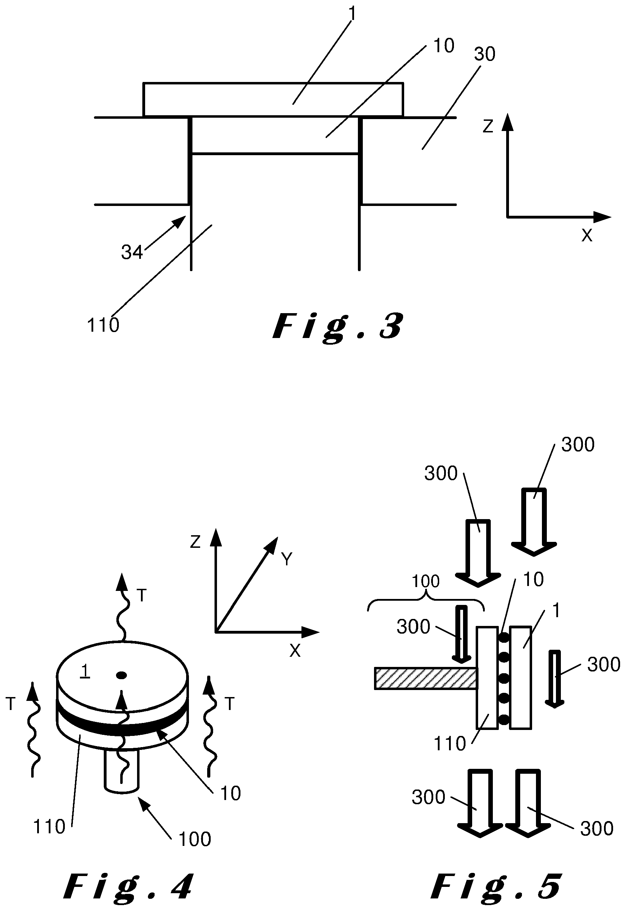

En référence plus particulièrement aux figures 2 et 3, le système de mise en référence comprend une fourchette 30 fixée sur la machine de collage et présentant à son extrémité une ouverture en U 34 dans laquelle s'insère le plateau 110. Le positionnement de la fourchette 30 est réglable en hauteur par rapport au porte-pièce 100 afin de créer un décalage entre la surface d'appui de la fourchette 30, sur laquelle vont reposer les bords périphériques de la pièce à usiner 1, et la face de collage du plateau 110 du porte-pièce 100 sur laquelle est déposée la couche de colle 10, ce que permet de régler l'épaisseur du joint de colle 10. Par exemple, la fourchette 30 peut être dimensionnée de sorte que l'épaisseur du joint de colle 10 est inférieure ou égale à 0,1 mm, et de préférence inférieure ou égale à 0,05 mm. Ce système de mise en référence permet avantageusement à la colle de rester sous la pièce à usiner 1 lorsque la pièce 1 est assemblée à son porte-pièce, et de former un joint de colle régulier, sans déformation, et indépendant de la mise en référence géométrique de la pièce à usiner 1, de sorte que le positionnement géométrique des pièces à usiner 1 sur les porte-pièces est constant et répétable.

Selon une autre variante non représentée, la machine de collage peut être agencée pour que la colle soit appliquée d'abord sur la pièce à usiner 1.

Le positionnement correct de la pièce à usiner 1 sur la fourchette 30 est assuré par le système de centrage de la machine de collage 1.

Une fois la pièce à usiner 1 mise en place sur la fourchette, le système d'appui de la machine de collage maintient une pression sur la pièce à usiner 1.

Puis, la couche de colle 10 est réticulée par un flash UV de la source 50 de lumière UV de la machine de collage. Une temporisation peut être prévue avant l'application du flash UV pour assurer une bonne répartition de la colle.

Ensuite, conformément à l'étape b) du procédé de l'invention, la pièce 1, collée sur son porte-pièce 100, est usinée. De manière avantageuse, l'étape b) d'usinage comprend le déplacement du porte-pièce 100 sur lequel la pièce mécanique 1 à usiner est collée entre différentes stations d'usinage et la fixation dudit porte-pièce 100 portant ladite pièce mécanique 1 à usiner sur lesdites stations d'usinage. A cet effet, le porte-pièce 100, portant la pièce 1, est démonté de la machine de collage, transporté, puis fixé sur le dispositif de fixation d'une ou plusieurs stations d'usinage, la pièce 1 demeurant collée sur son porte-pièce 100 pour réaliser les différents usinages ou d'autres traitements de ladite pièce 1, tels qu'un fraisage ou tout autre traitement nécessaire. Les stations d'usinage sont standard et connues de l'homme du métier. Elles sont toutefois pourvues d'un dispositif de fixation mécanique agencé pour recevoir, de manière amovible, l'accouplement prévu sur le socle 120 du porte-pièce 100.

La fixation de la pièce à usiner 1 sur son porte-pièce au moyen d'une colle réticulable, qui a été polymérisée pour former un réseau tridimensionnel, avec des liaisons covalentes entre les chaines polymères, permet de maintenir la pièce à usiner 1 sur son porte-pièce 100 avec tenue et rigidité, de sorte que la résistance mécanique en cisaillement est élevée malgré un joint de colle de très faible épaisseur, sans fluage, garantissant un positionnement de la pièce 1 précis, identique tout au long du process, et répétable entre les différentes pièces usinées. Cela permet de réduire les défauts d'usinage et d'obtenir un usinage très précis et répétable entre les pièces.

Si besoin, le porte-pièce 100 sur lequel la pièce 1 demeure collée, peut être démonté de la station d'usinage pour être transporté et remonté sur une autre station d'usinage ou autre traitement afin de réaliser un autre usinage ou autre traitement sur la pièce 1.

Ainsi, la pièce 1 n'est manipulée qu'une seule fois pour être assemblée à son porte-pièce 100 au début du process et peut subir différents traitements avec un serrage unique tout au long du process. Cela permet d'améliorer la qualité et l'aspect des pièces usinées en diminuant les coups, les chocs et les rayures dus aux manipulations inter-process.

Puis, une fois que la pièce 1 a subi tous les usinages et autres traitements nécessaires, la pièce usinée 1, conformément à l'étape c) du procédé de l'invention, est séparée de son porte-pièce 100 par application de chaleur à la couche de colle 10 à une température supérieure à la température d'activation de l'expansion des capsules thermoexpansibles.

Cette étape c) de séparation par application de chaleur peut s'effectuer par conduction via une plaque chauffante, par un flux de gaz chaud, par immersion dans un bain d'un fluide chaud, tel qu'un bain d'eau bouillante, par induction, et/ou par micro-ondes.

En référence à la figure 4, selon une première variante préférée, l'ensemble porte-pièce 100/pièce usinée collée 1 est disposé sur une plaque chauffante pour être chauffé, la chaleur T se diffusant jusqu'à la couche de colle 10.

Selon une deuxième variante préférée représentée sur la figure 5, l'ensemble porte-pièce 100/pièce usinée collée 1 est plongé dans un bain d'eau chaude 300 à l'état d'ébullition, à une température supérieure à 100° C, l'eau chaude 300 imprégnant la couche de colle 10 pour la réchauffer à la température souhaitée.

D'autres variantes d'application de la chaleur peuvent bien sûr être envisagées.

Plus généralement, la température de la chaleur appliquée à la couche de colle 10 lors de l'étape c) de séparation est supérieure à la température dégagée lors de l'étape d'usinage b) ou autres traitements, afin de ne pas déclencher le processus d'expansion des capsules lors de l'étape d'usinage b).

De préférence, la température de la chaleur appliquée à la couche de colle 10 lors de l'étape c) est comprise entre 80° C et 235° C, et plus préférentiellement entre 80° C et 180° C, les capsules thermoexpansibles étant choisies pour s'expanser sur cette gamme de températures.

Bien évidemment, la température d'activation de l'expansion des capsules est supérieure à la température régnant lors de l'étape a) de collage et lors de l'étape b) d'usinage ou autres traitements, afin de ne pas déclencher le processus d'expansion des capsules lors de l'étape de collage a) ni lors de l'étape b) d'usinage ou autres traitements.

La température de la chaleur appliquée à la couche de colle 10 lors de l'étape c) doit également être supérieure à la température d'activation de l'expansion des capsules thermoexpansibles afin de déclencher le processus d'expansion desdites capsules lors de l'étape c), l'expansion des capsules au sein de la couche de colle 10 permettant de briser les liaisons d'interfaces pièce usinée/colle et colle/porte-pièce afin de pouvoir récupérer, après le décollage, trois éléments distincts, à savoir la pièce usinée, son porte-pièce, et un coussin de colle. Ainsi, la pièce usinée 1 peut être facilement séparée de son porte-pièce 100 et cela sans résidu, notamment sur la pièce usinée 1.

De ce fait, d'une manière avantageuse, l'étape c) de séparation de la pièce usinée 1 n'est suivie d'aucune étape de nettoyage de ladite pièce usinée 1 une fois séparée de son porte-pièce 100.

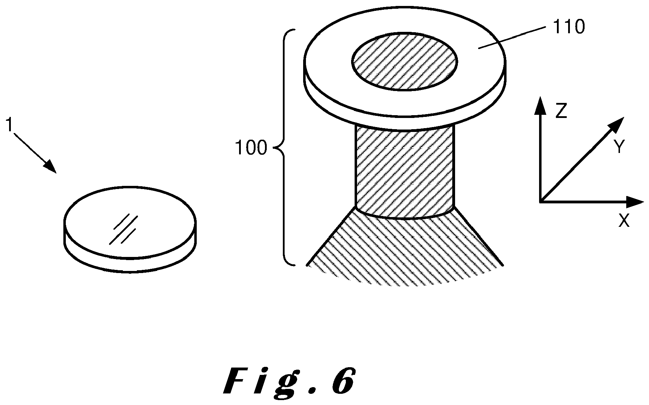

On obtient alors, comme le montre la figure 6, la pièce usinée 1, sans aucun résidu sur la pièce 1, et le porte-pièce 100. Son plateau 110 est de préférence également sans résidu de colle, lesdits résidus de la colle réticulée pouvant facilement être isolés.

Avantageusement, les étapes a) de collage et c) de séparation sont réalisées très rapidement de sorte que le temps de cycle pour réaliser les étapes a) et c) est inférieur à 90 secondes, et de préférence inférieur à 60 secondes.

Plus particulièrement, l'étape c) de séparation est réalisée sur une durée inférieure à 90 secondes, de préférence inférieure à 60 secondes, préférentiellement inférieure à 30 secondes, et plus préférentiellement inférieure à 10 secondes.

Ainsi, la séparation de la pièce usinée 1 de son porte-pièce 100 lors de l'étape c) est facile. De plus, le nettoyage éventuel du porte-pièce 100 est simple, sans action mécanique.

Le procédé selon l'invention permet de fixer de manière temporaire, avec tenue, une pièce à usiner sur son porte-pièce, l'assemblage présentant une résistance aux efforts d'usinage ou autres traitements, permettant un usinage précis, répétable, rigide et automatisable. De plus, la séparation de la pièce usinée de son porte-pièce est simple, rapide, et automatisable, sans résidu sur la pièce ni sur le porte-pièce. Ces différents avantages autorisent une industrialisation du procédé d'usinage selon l'invention.

## Revendications

1. Procédé d'usinage d'une pièce mécanique (1) comprenant :
a) une étape de collage de ladite pièce mécanique (1) à usiner sur un porte-pièce (100) par dépôt d'une couche de colle réticulable (10) comprenant une composition adhésive réticulable et des capsules thermoexpansibles renfermant un gaz, suivi d'une réticulation de ladite couche de colle (10),
b) au moins une étape d'usinage de la pièce mécanique (1) à usiner collée sur son porte-pièce (100) selon l'étape a),
c) une étape de séparation de la pièce mécanique (1), usinée selon l'étape b), de son porte-pièce (100) par application de chaleur à ladite couche de colle (10) à une température supérieure à la température d'activation de l'expansion des capsules thermoexpansibles.

2. Procédé d'usinage selon la revendication 1, **caractérisé en ce que** l'étape a) de collage comprend une étape de mise en référence de la pièce mécanique (1) à usiner pour créer un joint de colle entre la pièce mécanique (1) à usiner et son porte-pièce (100).

3. Procédé d'usinage selon la revendication 2, **caractérisé en ce que** l'épaisseur du joint de colle est inférieure ou égale à 0,1 mm, et de préférence inférieure ou égale à 0,05 mm.

4. Procédé d'usinage selon l'une des revendications précédentes, **caractérisé en ce que** la colle réticulable est une colle réticulable par UV comprenant:
- 60 à 95 % en poids d'une composition adhésive réticulable par UV comprenant:
- 30 à 60% en poids de résine de polyuréthane méthacrylate ;
- 10 à 30% en poids de méthacrylate de 2-hydroxyéthyle ;
- 10 à 30% en poids de méthacrylate d'isobornyle;
- 1 à 5% en poids de méthacrylate d'hydroxyalkyle ;
- 1 à 5% en poids d'acide acrylique;
- 0.1 à 1 % en poids d'acide méthacrylique;
- 1 à 5 % en poids de photoinitiateur, les quantités respectives des composants de la composition adhésive étant telles que leur somme est égale à 100% en poids;
- 5 à 40% en poids de capsules thermoexpansibles renfermant un gaz et ayant une taille moyenne de particules initiale comprise entre 5 µm et 40 µm, et de préférence entre 5 µm et 20 µm.

5. Procédé d'usinage selon l'une des revendications précédentes, **caractérisé en ce que** les capsules thermoexpansibles sont expansibles à une température d'activation de l'expansion supérieure à la température dégagée lors de l'étape b).

6. Procédé d'usinage selon l'une des revendications précédentes, **caractérisé en ce que** l'étape b) d'usinage comprend le déplacement du porte-pièce (100) sur lequel la pièce mécanique (1) à usiner est collée entre différentes stations d'usinage et la fixation dudit porte-pièce (100) portant ladite pièce mécanique (1) à usiner sur lesdites stations d'usinage.

7. Procédé d'usinage selon l'une des revendications précédentes , **caractérisé en ce que** l'étape c) de séparation par application de chaleur s'effectue par conduction via une plaque chauffante, par un flux de gaz chaud, par immersion dans un bain d'un fluide chaud, par induction, et/ou par micro-ondes.

8. Procédé d'usinage selon l'une des revendications précédentes, **caractérisé en ce que** la température de la chaleur appliquée à la couche de colle (10) lors de l'étape c) de séparation est supérieure à la température dégagée lors de l'étape b).

9. Procédé d'usinage selon l'une des revendications précédentes, **caractérisé en ce que** la température de la chaleur appliquée à la couche de colle (10) lors de l'étape c) de séparation est comprise entre 80° C et 235° C, et de préférence entre 80° C et 180° C.

10. Procédé d'usinage selon l'une des revendications précédentes, **caractérisé en ce que** l'étape c) de séparation de la pièce mécanique (1) usinée n'est suivie d'aucune étape de nettoyage de ladite pièce mécanique (1) usinée une fois séparée de son porte-pièce (100).

11. Procédé d'usinage selon l'une des revendications précédentes , **caractérisé en ce que** le temps de cycle pour réaliser l'étape a) et l'étape c) est inférieur à 90 secondes, et de préférence inférieur à 60 secondes.

12. Procédé d'usinage selon l'une des revendications précédentes , **caractérisé en ce que** l'étape c) de séparation est réalisée sur une durée inférieure à 90 secondes, de préférence inférieure à 60 secondes, préférentiellement inférieure à 30 secondes, et plus préférentiellement inférieure à 10 secondes.

13. Procédé d'usinage selon l'une des revendications précédentes, **caractérisé en ce que** la colle est une colle réticulable par UV, **en ce que** la pièce mécanique (1) et/ou le porte-pièce (100) est, au moins partiellement, transparent aux UV, et **en ce qu'**un faisceau de lumière UV est apporté à la couche de colle (10) à travers ladite pièce mécanique (1) et/ou à travers ledit porte-pièce (100).

14. Procédé d'usinage selon l'une des revendications précédentes, **caractérisé en ce que** la pièce mécanique (1) à usiner est réalisée, au moins partiellement, dans un matériau choisi parmi le groupe comprenant le verre, le corindon, le saphir, le quartz, la céramique, un métal, un alliage non-ferreux, un semi-conducteur, et une combinaison de ces matériaux.

15. Machine de collage d'une pièce mécanique (1) à usiner sur un porte-pièce (100) au moyen d'une colle réticulable pour la mise en oeuvre de l'étape a) du procédé d'usinage selon l'une des revendications 1 à 14, **caractérisée en ce qu'**elle comprend au moins un dispositif de fixation d'un porte-pièce, un système de centrage de la pièce à usiner sur son porte-pièce, un système de dosage de la colle, un système de dépôt de la colle, et un système d'appui de la pièce mécanique (1) à usiner assemblée à son porte-pièce (100).

16. Machine de collage selon la revendication 15, **caractérisée en ce que** la colle est une colle réticulable par UV, et **en ce que** la machine de collage comprend une source (50) de lumière UV.

17. Machine de collage selon l'une des revendications 15 et 16, **caractérisée en ce qu'**elle comprend un système de mise en référence de la pièce à usiner agencé pour créer un joint de colle (10) entre la pièce mécanique (1) à usiner et son porte-pièce (100).
